# EUROPÄISCHE PATENTSCHRIFT

(11) **EP 2 611 852 B1**
(45) Veröffentlichungstag und Bekanntmachung des Hinweises auf die Patenterteilung: **30.07.2014**
(21) Anmeldenummer: 11748646.4
(22) Anmeldetag: 24.08.2011
(51) Int. Cl.: C08G 63/12

(54) **VERZWEIGTE POLYESTER AUF BASIS VON ZITRONENSÄURE SOWIE DEREN HERSTELLUNG UND VERWENDUNG**
BRANCHED POLYESTERS BASED ON CITRIC ACID AND ALSO THEIR PREPARATION AND USE
POLYESTERS RAMIFIÉS À BASE D'ACIDE CITRIQUE AINSI QUE LEUR FABRICATION ET UTILISATION

(30) Priorität: 31.08.2010 EP 10174667; 31.08.2010 US 378404 P
(43) Veröffentlichungstag der Anmeldung: 10.07.2013
(73) Patentinhaber: BASF SE, 67056 Ludwigshafen (DE)
(72) Erfinder: DJURIC, Dejan, 68165 Mannheim (DE); HABERECHT, Monika, 67063 Ludwigshafen (DE); KOLTER, Karl, 67117 Limburgerhof (DE); BRUCHMANN, Bernd, 67251 Freinsheim (DE)
(86) Internationale Anmeldenummer: PCT/EP2011/064498
(87) Internationale Veröffentlichungsnummer: WO 2012/028496

(56) Entgegenhaltungen:
- US-A- 5 665 853
- US-A1- 2008 200 591
- US-B1- 6 861 498

## Beschreibung

Die vorliegende Erfindung betrifft die Verwendung von verzweigten Polyestern, die Zitronensäure als Aufbaukomponente enthalten, zur Solubilisierung schwerlöslicher, basischer pharmazeutischer Wirkstoffe.

Zahlreiche Arzneistoffe weisen eine sehr niedrige Wasserlöslichkeit auf und können dadurch nicht aus dem Magen- und Darmtrakt resorbiert werden. Die Folge ist eine sehr niedrige Bioverfügbarkeit. Bei Arzneistoffen, die eine basische oder saure Gruppe besitzen, lassen sich durch Umsetzung mit Säuren oder Laugen entsprechende Salze bilden, die z. T. bessere Löslichkeiten aufweisen. Hierzu werden in der Regel niedermolekulare Säuren oder Laugen verwendet. Die gebräuchlichsten Säuren sind: Salzsäure, Schwefelsäure, Methansulfonsäure, Essigsäure, Zitronensäure, Weinsäure, Fumarsäure, Maleinsäure, Malonsäure, Bernsteinsäure, Phosphorsäure. Als Basen finden NaOH, KOH, L-Lysin, L-Arginin, Triethanolamin oder Diethylamin Verwendung.

Bei vielen Arzneistoffen sind jedoch auch die Salze mit diesen niedermolekularen Verbindungen schwer löslich in Wasser. Häufig besteht kaum ein Unterschied zwischen der Löslichkeit der Arzneistoffsäure oder -base und der eines Salzes mit den genannten Verbindungen. Die Ursache dieser schlechten Löslichkeit liegt in der Regel darin, dass das Salz ein sehr stabiles Kristallgitter ausbildet, das sich energetisch in einem günstigen Zustand befindet, wodurch die Tendenz in Lösung zu gehen niedrig ist. Falls zusätzlich der Energiegewinn durch die Hydratation niedrig ist, wird die Löslichkeit weiter herabgesetzt. Ferner zeichnen sich viele Wirkstoffe durch eine ausgeprägte Lipophilie aus, die die Wasserlöslichkeit ihrer Salze weiter herabsetzt.

Salze von Arzneistoffen mit polymeren Säuren oder Basen wurden bisher im Prinzip schon hergestellt, jedoch wurden Polymere eingesetzt, die nicht über einen großen pH-Bereich löslich waren - insbesondere nicht im physiologisch bedeutsamen Bereich von pH 1-8 - oder die in Lösung als Säure, Base oder Salz eine hohe Viskosität aufwiesen. Werden Polymere eingesetzt, die bei sauren pH-Werten unlöslich sind - wie dies bei magensaftresistenten Polymeren der Fall ist - erfolgt keine Auflösung des Arzneistoffes, sondern eine Ausfällung des Polymers. Dadurch wird die Wirkstofffreisetzung verhindert oder zumindest stark verlangsamt. Es entsteht dadurch eine magensaftresistente Zubereitung, die die Bioverfügbarkeit herabsetzt, da einerseits im Magen keine Resorption erfolgen kann und andererseits im Dünndarm bei neutralen pH-Werten erst eine Auflösung der Zubereitung erfolgen muss, wodurch die Freisetzung relativ spät erfolgt und nicht mehr die gesamte Dünndarmoberfläche für die Resorption zur Verfügung steht.

Weisen die Polymere eine hohe Viskosität in wässriger Lösung auf, wird die Wirkstofffreisetzung aus einer festen Darreichungsform wie z. B. einer Tablette ebenfalls verzögert. Bei der Auflösung des Salzes entsteht an der Oberfläche der Tablette und in den Hohlräumen ein Gel bzw. eine hochviskose Lösung, die das weitere Vordringen des Wassers in den Tablettenkern behindert und den Zerfall verlangsamt. Durch diesen Effekt wie auch durch den verringerten Diffusionskoeffizienten der Arzneistoffmoleküle durch Areale mit hoher Viskosität wird die Freisetzung des Arzneistoffes verzögert. Diese Möglichkeit der Freisetzungsverzögerung macht man sich bei der Herstellung von Matrixretardformen mit Polymeren hoher Viskosität wie z.B. Alginate, Xanthan, Hydroxypropylmethylcellulose, Natriumcarboxymethylcellulose, Pektin etc. zu Nutze. In keinster Weise sind diese Polymeren aber zur Herstellung von schnellfreisetzenden Formen geeignet bei denen ein schwerlöslicher Arzneistoff schnell aufgelöst werden soll und der gesamten Magen- und Dünndarmoberfläche zur Resorption dargeboten werden soll.

In EP 0211268 werden Minoxidilsalze mit polymeren Polyanionen beschrieben, die eine Freisetzungsverzögerung aufweisen und zur dermalen Applikation verwendet werden. Minoxidil ist ein Arzneistoff, der vier zur Salzbildung befähigte Gruppen enthält und die entsprechenden polymeren Salze waren schlechter löslich als das Hydrochlorid. Durch die zahlreichen zur Salzbildung befähigten Gruppen ist die Dissoziation des Salzes stark vermindert und die Löslichkeit gegenüber dem Hydrochlorid nicht verbessert. Orale Applikationen sind nicht beschrieben.

In US 4997643 wird ein biokompatibles, filmbildendes Delivery System für die topische Applikation beschrieben, das ein polymeres Salz mit einer carboxylgruppentragenden Komponente beinhaltet. Als Arzneistoff wird ebenfalls Minoxidil eingesetzt, welches die oben genannten Besonderheiten aufweist. Orale Anwendungen sind nicht beschrieben.

In US 4248855 werden flüssige Zubereitungen beansprucht, die Salze aus basischen Arzneistoffen und wasserunlöslichen Polymeren enthalten, und die einen Retardeffekt besitzen. Durch die Verwendung von wasserunlöslichen Polymeren zeigen die Zubereitungen keine schnelle Freisetzung und keine hohe Löslichkeit über einen großen pH-Bereich.

Aus der US 5736127 ist bekannt, dass aus basischen Arzneistoffen und Polymeren mit Carboxyl - Amidin - Carboxyl-Triaden Salze gebildet werden können. Aufgrund der hohen Molekulargewichte sind die Polymeren gelbildend, wodurch die Freisetzung der Wirkstoffe verzögert wird. Eine Eignung für schnell freisetzende Tabletten ist nicht gegeben.

In der US 4205060 werden Mikrokapseln mit verzögerter Freisetzung beschrieben, die im Kern ein Salz eines basischen Arzneistoffes mit einem carboxylgruppenhaltigen Polymer enthalten und der mit einem wasserunlöslichen Polymer umhüllt ist. Durch das carboxylgruppenhaltige Polymer wird die Freisetzung der verwendeten löslichen Arzneistoffe vermindert.

Salze des Ranitidins mit Polycarbonsäuren sind in EP 0721785 beschrieben. Die Polycarbonsäuren binden das Ranitidin und sollen dessen Bitterkeit herabsetzen. Allerdings sind niedermolekulare Salze des Ranitidins gut löslich, so dass die Polycarbonsäuren lediglich die Beweglichkeit und Diffusion des Ranitidins einschränken, damit es nicht so schnell an die Bitterrezeptoren gelangt.

Aus der WO 2009/074609 sind Salze von Wirkstoffen mit polymeren Gegenionen bekannt, wobei die Polymere sowohl Anionen- als Kationencharakter haben können. Anionische Polymere tragen vorzugsweise Carboxyl- oder Sulfonat-Gruppen.

In der US 5,652,330 werden Polykondensate von Zitronensäure beschrieben, die entweder Polykondensate der Zitronensäure mit sich selbst darstellen oder in denen Alkoholkomponenten im Unterschuss mit einem Molverhältnis von 100: 1 bis 2.5 :1 einkondensiert werden. Die dort beschriebenen Polykondensate werden in Wasch- und Reinigungsmitteln insbesondere zur Verhinderung von Ablagerungen verwendet.

In der WO 2007/125028 werden wasserlösliche hyperverzweigte Polyester zur Solubilisierung von hydrophoben Wirkstoffen in wässrigem Medium beschrieben. Die dort beschriebenen hyperverzweigten Polyester enthalten von Zitronensäure verschiedene Bausteine und zeigen keine bevorzugte Solubilisierung basischer Wirkstoffe.

DE 2633418 beschreibt sulfonatgruppenhaltige Polyester, die bezogen auf den Gesamtanteil an Carbonsäuremonomeren bis zu 40 mol-% Zitronensäure enthalten können, und deren Verwendung in Haarbehandlungsmitteln.

Aufgabe der vorliegenden Erfindung war es, Polymere zur Verbesserung der Löslichkeit von schwerlöslichen Wirkstoffen in wässrigen Medien zu finden. Aufgabe der Erfindung war es insbesondere, Löslichkeitsvermittler für basische, zur Salzbildung befähigte Wirkstoffe und entsprechende Wirkstoffsalze zu finden, die nach der Verarbeitung zu oralen Dosierungsformen eine im Vergleich zum entsprechenden Hydrochloridsalz schnellere Freisetzung und höhere Löslichkeit des Wirkstoffs ermöglichen. Aufgabe war es weiterhin, solche Salze zu finden, die eine gute Tablettierbarkeit des Wirkstoffs ermöglichen.

Aufgabe der Erfindung war es auch, geeignete Polymere für die Bildung polymerer Wirkstoffsalze zu finden.

Der Erfindung lag weiterhin die Aufgabe zugrunde, mittels eines technisch einfachen und preiswerten Verfahrens verzweigte Polyester als Polymerkomponente für polymere Wirkstoffsalze bereitzustellen, die über eine hohe Anzahl von Säurefunktionen verfügen und aus Monomeren geringer Toxizität und guter Bioabbaubarkeit bestehen.

Die Aufgabe konnte erfindungsgemäß gelöst werden durch Verwendung von verzweigten Polyestern, in denen Zitronensäure oder solche enthaltende Gemische als Polycarbonsäurekomponente einpolymerisiert wird.

Die verzweigten Polyester werden erhalten durch Polykondensation von Zitronensäure mit mindestens einem Polyalkohol und gegebenenfalls weiteren Polycarbonsäurekomponenten, wobei unter einem Polyalkohol ein Molekül mit mindestens zwei Hydroxylgruppen verstanden wird und wobei das Molverhältnis von Zitronensäure zu Polyalkohol 2,4:1 bis 1:3 beträgt.

Bevorzugt beträgt das Molverhältnis Zitronensäure zu Polyalkohol 2,4:1 bis 1:2,4, besonders bevorzugt 2:1 bis 1:2.

Erfindungsgemäß eignen sich solche verzweigten Polyester zur Solubilisierung von in Wasser schwer löslichen Wirkstoffen durch Ausbildung polymerer Wirkstoffsalze.

Bevorzugt eignen sich hochverzweigte Polyester, im speziellen Fall auch hyperverzweigte Polyester. Unter hochverzweigten Polyestern werden im Rahmen dieser Erfindung unvernetzte Polyester mit Hydroxy- und Carboxygruppen verstanden, die sowohl strukturell als auch molekular uneinheitlich sind. Unvernetzt im Rahmen dieser Schrift bedeutet, dass ein Vernetzungsgrad von weniger als 15 Gew.%, bevorzugt von weniger als 10 Gew. %, bestimmt über den unlöslichen Anteil des Polymeren, vorhanden ist.

Hochverzweigte Polyester können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von Dendrimeren und hochverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB) des Polymeren 10 bis 99,9%, bevorzugt 20 bis 99%, besonders bevorzugt 20 bis 95% beträgt. Der Verzweigungsgrad DB ist dabei definiert als DB (%) = (T + Z) / (T + Z + L) x 100, mit
- T: mittlere Anzahl der terminal gebundenen Monomereinheiten,
- Z: mittlere Anzahl der Verzweigungen bildenden Monomereinheiten,
- L: mittlere Anzahl der linear gebundenen Monomereinheiten.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 - 35.

Unter Zitronensäure werden erfindungsgemäß Zitronensäureanhydrat, Zitronensäureanhydrid,die Hydrate der Zitronensäure, wie beispielsweise Zitronensäuremonohydrat, und Alkali-, Erdalkali-oder Ammoniumsalze der Zitronensäure verstanden. Erfindungsgemäß kann statt Zitronensäure auch Isozitronensäure eingesetzt werden.

Die Zitronensäure oder deren oben genannte Derivate können auch im Gemisch mit den Mono-, Di- oder Tri-(C1 -C4)-Alkylestern der Zitronensäure, beispielsweise den Methyl- oder Ethylestern, eingesetzt werden.

Als Polyalkohole eignen sich erfindungsgemäß Alkohole mit mindestens zwei Hydroxylgruppen und bis zu sechs Hydroxylgruppen. Bevorzugt kommen Diole oder Triole oder Mischungen verschiedener Diole und/oder Triole in Betracht. Geeignete Polyalkohole sind beispielsweise Polyetherole. Die Polyetherole können durch Umsetzung mit Ethylenoxid, Propylenoxid und/oder Butylenoxid erhalten werden. Insbesondere eignen sich Polyetherole auf Basis von Ethylenoxid und/oder Propylenoxid. Es können auch Gemische solcher Polyetherole eingesetzt werden.

Als Diole eignen sich beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH_{3]}CH₂O)ₙ-H, wobei n eine ganze Zahl und n ≥ 4 ist, Polyethylenpolypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Beispielsweise können ein bis sechs, bevorzugt ein bis vier, besonders bevorzugt ein bis drei, ganz besonders bevorzugt ein bis zwei und insbesondere ein Diol eingesetzt werden. Dabei kann eine oder auch beide Hydroxygruppen in den vorstehend genannten Diolen durch SH-Gruppen substituiert werden. Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol und Polyethylenglykole mit einem mittleren Molekulargewicht zwischen 200 und 1000 g/mol.

Die zweiwertigen Polyalkohole können optional noch weitere Funktionalitäten wie beispielsweise Carbonyl, Carboxy, Alkoxycarbonyl oder Sulfonyl enthalten, wie beispielsweise Dimethylolpropionsäure oder Dimethylolbuttersäure, sowie deren C₁-C₄-Alkyl-ester, bevorzugt weisen die Alkohole jedoch keine weiteren Funktionalitäten auf.

Als Triole oder höherfunktionelle Polyalkohole eignen sich beispielsweise Glycerin, Trimethylolmethan, Trimethylolethan, Trimethylolpropan, Bis(trimethylolpropan), Trimethylolbutan, Trimethylolpentan, 1,2,4-Butantriol, 1,2,6-Hexantriol,Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Tris(hydroxymethyl)isocyanurat, Tris(hydroxyethyl)isocyanurat (THEIC), Tris(hydroxypropyl)isocyanurat und N-[1,3-bis(hydroxymethyl)-2,5-dioxo-4-imidazolidinyl]-N,N'-bis(hydroxymethyl)harnstoff.

Weiterhin eignen sich auch Zucker oder Zuckeralkohole wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, oder Inosit.

Weiterhin eignen sich tri- oder höherfunktionelle Polyetherole auf Basis tri- oder höherfunktioneller Alkohole, die durch Umsetzung mit Ethylenoxid, Propylenoxid und/oder Butylenoxid erhatlen werden oder Mischungen solcher Umsetzungsprodukte.

Dabei sind Glycerin, Diglycerin, Triglycerin, Trimethylolethan, Trimethylolpropan, Di(trimethylolpropan), 1,2,4-Butantriol, 1,2,6-Hexantriol, Pentaerythrit, Sucrose oder Sorbit sowie deren Polyetherole auf Basis von Ethylenoxid und/oder Propylenoxid besonders bevorzugt.

Es ist auch möglich, Gemische von mindestens trifunktionellen Polyalkoholen einzusetzen. Beispielsweise können ein bis sechs, bevorzugt ein bis vier, besonders bevorzugt ein bis drei, ganz besonders bevorzugt ein bis zwei und insbesondere ein mindestens trifunktioneller Alkohol eingesetzt werden.

Gemäß einer Ausführungsform der Erfindung können zusätzlich zur Zitronensäure weitere Carbonsäurekomponenten, insbesondere Dicarbonsäuren oder Hydroxycarbonsäuren, einkondensiert werden, wobei der molare Anteil an solchen weiteren Carbonsäurekomponenten kleiner ist als der Anteil an Zitronensäure, und bevorzugt nicht mehr als 30 mol-% bezogen auf die eingesetzte Menge an Zitronensäure betragen soll. Als Dicarbonsäuren eignen sich beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure, Fumarsäure, Itaconsäure, Mesaconsäure, Glutaconsäure oder Citraconsäure sind einsetzbar.

Als Hydroxycarbonsäuren eignen sich beispielsweise aliphatische Hydroxycarbonsäuren wie Hydroxyessigsäure (Glykolsäure), Hydroxypropionsäure (Milchsäure), Hydroxyvaleriansäure Hydroxybernsteinsäure (Äpfelsäure), Chinasäure (2,3,4,5-Tetrahydroxy-cyclohexancarbonsäure), Dimethylolpropionsäure oder Dimethylolbuttersäure oder Lactone, wie Butyrolacton, Valerolacton oder Caprolacton.

Die genannten Dicarbonsäuren oder Hydroxycarbonsäuren können auch substituiert sein mit einem oder mehreren Resten, ausgewählt aus
C₁-C₂₀-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Tetradecyl, n-Hexadecyl, n-Octadecyl, oder n-Eicosyl,
C₂-C₂₀-Alkenylgruppen, beispielsweise Butenyl, Hexenyl, Octenyl, Decenyl, Dodecenyl, Tetradecenyl, Hexadecenyl, Octadecenyl oder Eicosenyl,
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren oder deren Derivate seien genannt: 2-Methylmalonsäure, 2-Ethylmalonsäure, 2-Phenylmalonsäure, 2-Methylbernsteinsäure, 2-Ethylbernsteinsäure, 2-Phenylbemsteinsäure, 3,3-Dimethylglutarsäure, Dodecenylbernsteinsäure, Hexadecenylbernsteinsäure, Octadecenylbernsteinsäure sowie Umsetzungsprodukte von Polyisobutylenen mit einem Enophil ausgewählt aus der Gruppe Fumarsäuredichlorid, Fumarsäure, Maleinsäuredichlorid, Maleinsäureanhydrid und/oder Maleinsäure, bevorzugt mit Maleinsäureanhydrid oder Maleinsäuredichlorid, besonders bevorzugt mit Maleinsäureanhydrid, zu mit Polyisobutylen substituierten Bernsteinsäurederivaten, worin die Polyisobutylenylgruppe ein zahlenmittleres Molekulargewicht Mₙ von 100 bis 100000 Dalton aufweisen kann. Diese Umsetzung erfolgt nach den dem Fachmann bekannten Verfahren und bevorzugt wie beschrieben in den deutschen Offenlegungsschriften DE-A 195 19 042, dort bevorzugt von S. 2, Z. 39 bis S. 4, Z. 2 und besonders bevorzugt von S. 3, Z. 35 - 58, und DE-A 43 19 671, dort bevorzugt von S. 2, Z. 30 bis Z. 68, und DE-A 43 19 672, dort bevorzugt von S. 2, Z. 44 bis S. 3, Z. 19, beschriebenen Verfahren zur Umsetzung von Polyisobutylenen mit Enophilen.

Die Dicarbonsäuren und andere weitere Carbonsäurekomponenten lassen sich entweder als solche oder in Form von Derivaten einsetzen.

### Unter Derivaten werden bevorzugt verstanden:

Die betreffenden Anhydride in monomerer oder auch polymerer Form, Mono- oder Dialkylester, bevorzugt Mono- oder Di-C₁-C₄-alkylester, besonders bevorzugt Mono- oder Dimethylester oder die entsprechenden Mono- oder Diethylester, ferner Mono- und Divinylester sowie gemischte Ester, bevorzugt gemischte Ester mit unterschiedlichen C₁-C₄-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-C₁-C₄-alkylester und ganz besonders bevorzugt sind die Anhydride.

C₁-C₄-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

Besonders bevorzugt setzt man als weitere Carbonsäurekomponenten Malonsäure, Bernsteinsäure, Hydroxybemsteinsäure, Glutarsäure, Adipinsäure, Sebacinsäure, Octadecenylbernsteinsäureanhydrid, 1,2-, 1,3- oder 1,4-Cyclohexandicarbonsäuren (Hexahydrophthalsäuren als cis- oder trans-Verbindungen oder deren Gemische), Chinasäure, Phthalsäure, Isophthalsäure, Terephthalsäure oder deren Anhydride oder Mono-oder Dialkylester ein.

Die Menge an Dicarbonsäure oder anderen weiteren Carbonsäurekomponenten beträgt gemäß dieser Ausführungsform der Erfindung bevorzugt nicht mehr als 30 mol-% gegenüber der eingesetzten Menge an Zitronensäure, besonders bevorzugt nicht mehr als 20 mol-%, ganz besonders bevorzugt nicht mehr als 15 mol-%.

Gemäß einer anderen bevorzugten Ausführungsform der Erfindung wird Zitronensäure als einzige Carbonsäurekomponente eingesetzt.

Das erfindungsgemäße Verfahren zur Herstellung der verzweigten Polyester auf Basis von Zitronensäure kann in Substanz oder in Gegenwart eines organischen Lösemittels durchgeführt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache.

In einer bevorzugten Ausführungsform wird die Reaktion ohne Zusatz von Lösungsmittel durchgeführt.

Zur Durchführung des erfindungsgemäßen Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Man kann das erfindungsgemäße Verfahren in Abwesenheit von Katalysatoren durchführen. Vorzugsweise arbeitet man jedoch in Gegenwart von mindestens einem Katalysator. Dies sind bevorzugt saure anorganische, metallorganische oder organische Katalysatoren oder Gemische aus mehreren sauren anorganischen, metallorganischen oder organischen Katalysatoren.

Als saure Katalysatoren werden im Rahmen dieser Schrift auch Lewis-Säuren angesehen, also solche Verbindungen gemäß Römpps Chemie-Lexikon, Stichwort "Säure-Base-Begriff", die ein Elektronenpaar in die Valenzschale eines ihrer Atome aufnehmen können.

Als saure anorganische Katalysatoren im Sinne der vorliegenden Erfindung sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere ≤ 5) und saures Aluminiumoxid zu nennen. Weiterhin sind beispielsweise Alumiumverbindungen der allgemeinen Formel Al(OR¹)₃ und Titanate der allgemeinen Formel Ti(OR¹)₄ als saure anorganische Katalysatoren einsetzbar, wobei die Reste R¹ jeweils gleich oder verschieden sein können und unabhängig voneinander gewählt sind aus

C₁-C₂₀-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl.

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R¹ in Al(OR¹)₃ bzw. Ti(OR¹)₄ jeweils gleich und gewählt aus n-Butyl, Isopropyl, 2-Ethylhexyl, n-Octyl, Decyl oder Dodecyl.

Bevorzugte saure metallorganische Katalysatoren sind beispielsweise gewählt aus Dialkylzinnoxiden R¹₂SnO oder Dialkylzinndiestem R¹₂Sn(OR²)₂ wobei R¹ wie oben stehend definiert ist und gleich oder verschieden sein kann.

R² kann die gleichen Bedeutungen haben wie R¹ und zusätzlich C₆-C₁₂-Aryl sein, beispielsweise Phenyl, o-, m- oder p-Tolyl, Xylyl oder Naphthyl. R² kann jeweils gleich oder verschieden sein.

Beispiele für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat. Denkbar sind auch antimon-, wismut- oder aluminiumorganische Katalysatoren.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organischen oder metallorganischen oder auch anorganischen Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man bevorzugt 1 bis 10000 ppm Katalysator, besonders bevorzugt 2 bis 5000 ppm, bezogen auf die Gesamtmasse der hydroxy- und der carboxygruppenhaltigen Verbindungen, ein.

Wünscht man saure anorganische, metallorganische oder organische Katalysatoren einzusetzen, so wird das Verfahren erfindungsgemäß bei Temperaturen von 60 bis 140 °C durchgeführt. Vorzugsweise arbeitet man bei Temperaturen von 80 bis 140 °C, besonders bevorzugt bei 100 bis 130 °C.

Es ist erfindungsgemäß auch möglich, als Katalysatoren Enzyme einzusetzen, wenn deren Einsatz auch weniger bevorzugt ist.

Dafür einsetzbare Enzyme sind beispielsweise ausgewählt unter Hydrolasen (E.C. 3.-.-.-), und unter diesen besonders unter den Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen und besonders bevorzugt Esterasen (E.C. 3.1.-.-). Ganz besonders bevorzugt sind Novozyme 435 (Lipase aus *Candida antarctica* B) oder Lipase aus Alcaligenes sp., Aspergillus sp., Mucor sp., Penicilium sp., Geotricum sp., Rhizopus sp., Burkholderia sp., Candida sp., Pseudomonas sp., Thermomyces sp. oder Schweinepankreas, insbesondere bevorzugt sind Lipase aus *Candida antarctica* B oder aus Burkholderia sp. Die aufgeführten Enzyme sind kommerziell erhältlich, beispielsweise bei Novozymes Biotech Inc., Dänemark.

Der Enzymgehalt im Reaktionsmedium liegt in der Regel im Bereich von etwa 0,1 bis 10 Gew.-%, bezogen auf die Summe der eingesetzten Komponenten

Wünscht man als Katalysatoren Enzyme einzusetzen, so wird das Verfahren erfindungsgemäß bei Temperaturen von 20 und bis 120 °C, bevorzugt 20 bis 100 °C und besonders bevorzugt 20 bis 80 °C durchgeführt.

Das erfindungsgemäße Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgasen, unter denen insbesondere Argon zu nennen ist.

Die Druckbedingungen des erfindungsgemäßen Verfahrens sind in der Regel unkritisch. Man kann bei deutlich verringertem Druck arbeiten, beispielsweise bei 0.001 bis 0.05 MPa. Das erfindungsgemäße Verfahren kann auch bei Drucken oberhalb von 0.05 MPa durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 0.12 MPa. Man kann auch unter deutlich erhöhtem Druck arbeiten, beispielsweise bei Drücken bis 1 MPa. Bevorzugt ist die Umsetzung bei verringertem oder Atmosphärendruck, besonders bevorzugt bei Atmosphärendruck.

Die Umsetzungsdauer des erfindungsgemäßen Verfahrens beträgt üblicherweise 10 Minuten bis 5 Tage, bevorzugt 30 Minuten bis 48 Stunden, besonders bevorzugt 1 bis 24 Stunden und ganz besonders bevorzugt 1 bis 12 Stunden.

Nach beendeter Reaktion lassen sich die hochfunktionellen verzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 bis 50 Gew-%, bevorzugt 0,5 bis 25 Gew-%, besonders bevorzugt 1 bis 10 Gew-% bei Temperaturen von beispielsweise 10 bis 140 °C, bevorzugt 20 bis 130 °C und besonders bevorzugt 30 bis 120 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche und/oder einer Neutralisation und/oder einer Nachwäsche unterworfen werden, bevorzugt lediglich einer Neutralisation. Gegebenenfalls können Neutralisation und Vorwäsche in der Reihenfolge auch vertauscht werden.

Aus der wässrigen Phase der Wäsche und/oder Neutralisation können enthaltene Wertprodukte durch Ansäuern und Extraktion mit einem Lösungsmittel zumindest teilweise wiedergewonnen und von Neuem eingesetzt werden.

Verfahrenstechnisch können für eine Wäsche oder Neutralisation im erfindungsgemäßen Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

In einer bevorzugten Ausführung kann jedoch auf eine Wäsche, Neutralisierung und Entfärbung verzichtet werden.

Die erfindungsgemäßen verzweigten Polyester weisen Molekulargewichte Mₙ von 500 bis 5000 g/mol, bevorzugt 1000 bis 5000 g/mol auf. Die Molekulargewichte Mw der erfindungsgemäßen Polyester können von 1500 bis 50000 g/mol, bevorzugt 2000 bis 30000 g/mol betragen.

Die erfindungsgemäßen verzweigten Polyester weisen Säurezahlen von 60 bis 600 mg KOH/g Polymer, vorzugsweise 80 bis 500 mg KOH/g Polymer und ganz besonders bevorzugt 100 bis 400 mg KOH/g Polymer auf.

Die erfindungsgemäßen verzweigten Polyester weisen Glasübergangstemperaturen im Bereich von -50 bis +50 °C, bevorzugt -40 bis +40 °C und ganz besonders bevorzugt - 30 bis +40 °C auf. Die Bestimmung der Glasübergangstemperatur erfolgt mittels DSC (Differential Scanning Calorimetry) bei einer Heizrate von 10 K/min.

Die erfindungsgemäßen verzweigten Polyester auf Basis von Zitronensäure eignen sich als Solubilisatoren zur Verbesserung der Löslichkeit von in Wasser schwer löslichen Substanzen. Insbesondere eignen sie sich zur Herstellung von polymeren Wirkstoffsalzen zur Löslichkeitsverbesserung von allen in Wasser wenig, schwer löslichen oder unlöslichen Substanzen, die in der Lage sind mit den sauren Gruppen der Polymerkomponente Salze zu bilden.

Als in Wasser schwer lösliche Substanzen kommen erfindungsgemäß biologisch aktive Substanzen oder Effektstoffe wie Pigmente in Betracht.

Als biologisch aktive Substanzen eigenen sich pharmazeutische, kosmetische, agrochemische oder dietätische Wirkstoffe oder Nahrungsergänzungsmittel.

Gemäß DAB 9 (Deutsches Arzneimittelbuch) erfolgt die Einstufung der Löslichkeit pharmazeutischer Wirkstoffe wie folgt: wenig löslich (löslich in 30 bis 100 Teilen Lösungsmittel); schwer löslich (löslich in 100 bis 1000 Teilen Lösungsmittel); praktisch unlöslich (löslich in mehr als 10000 Teilen Lösungsmittel). Erfindungsgemäß werden die wenig löslichen, schwer löslichen oder praktisch unlöslichen Wirkstoffe gemeinsam als "schwer löslich" bezeichnet. Die Wirkstoffe können dabei aus jedem Indikationsbereich kommen.

Als Beispiele seien hier Antihypertensiva, Vitamine, Cytostatika - insbesondere Taxol, Anästhetika, Neuroleptika, Antidepressiva, Antibiotika, Antimykotika, Fungizide, Chemotherapeutika, Urologika, Thrombozytenaggregationshemmer, Sulfonamide, Spasmolytika, Hormone, Immunglobuline, Sera, Schilddrüsentherapeutika, Psychopharmaka, Parkinsonmittel und andere Antihyperkinetika, Ophthalmika, Neuropathiepräparate, Calciumstoffwechselregulatoren, Muskelrelaxantia, Narkosemittel, Lipidsenker, Lebertherapeutika, Koronarmittel, Kardiaka, Immuntherapeutika, regulatorische Peptide und ihre Hemmstoffe, Hypnotika, Sedativa, Gynäkologika, Gichtmittel, Fibrinolytika, Enzympräparate und Transportproteine, Enzyminhibitoren, Emetika, Abmagerungsmittel ,Durchblutungsfördernde Mittel, Diuretika, Diagnostika, Corticoide, Cholinergika, Gallenwegstherapeutika, Antiasthmatika, Broncholytika, Betarezeptorenblocker, Calciumantagonisten, ACE-Hemmer, Arteriosklerosemittel, Antiphlogistika, Antikoagulantia, Antihypotonika, Antihypoglykämika, Antihypertonika, Antifibrinolytika, Antiepileptika, Antiemetika, Antidota, Antidiabetika, Antiarrhythmika, Antianämika, Antiallergika, Anthelmintika, Analgetika, Analeptika, Aldosteronantagonisten oder antivirale Wirkstoffe oder Wirkstoffe zur Behandlung von HIV-Infektionen und des AID-Syndroms genannt.

Bei der Herstellung der erfindungsgemäßen Polymeren ist vorzugsweise darauf zu achten, dass diese keine niedermolekulare Anionen wie z. B. Chlorid, Sulfat etc. aufweisen, die zu schwerlöslichen Salzen mit Wirkstoffen führen können.

Es kann sich jedoch von Fall zu Fall empfehlen, die erfindungsgemäßen polymeren Salze auch im Gemisch mit schwerer löslichen niedermolekularen Salzen der Wirkstoffe oder auch im Gemisch mit den entsprechenden teilneutralisierten polymeren Salzen zu verwenden.

Die Salzbildung zwischen Polymer und Wirkstoff kann dabei, bezogen auf die Anzahl der Säuregruppen im Polymer, stöchiometrisch sein. Es ist aber auch möglich die Umsetzung zum Salz nichtstöchiometrisch zur realisieren. Die Herstellung der erfindungsgemäßen Salze kann prinzipiell durch Trocknungs-, Schmelz- oder Ausfällungsprozesse erfolgen.

Trocknung einer wässrigen oder organischen Lösung
Der Wirkstoff und das Polymer werden in Wasser oder organischen Lösungsmitteln gelöst und die Lösung wird anschließend getrocknet. Das Lösen kann auch bei erhöhten Temperaturen (30 - 200 °C) und unter Druck erfolgen.
Prinzipiell sind alle Trocknungsarten möglich, wie z.B. Sprühtrocknung, Wirbelschichttrocknung, Schaufeltrocknung, Gefriertrocknung, Vakuumtrocknung, Bandtrocknung, Walzentrocknung, Schleppgastrocknung, Eindampfen etc.

### Schmelzprozesse

Der Wirkstoff wird mit dem Polymer gemischt. Durch Erhitzen auf Temperaturen von 50 bis 200°C, bevorzugt 50 bis 140 °C und ganz besonders 50 bis 130 °C erfolgt die Herstellung des polymeren Salzes. Hierbei sind Temperaturen oberhalb der Glasübergangstemperatur des Polymers oder des Schmelzpunktes des Wirkstoffes vorteilhaft. Durch Zugabe eines weichmachenden Hilfsstoffes wie z. B. Wasser, organischem Lösungsmittel oder üblichen organischen Weichmachern lässt sich die Verarbeitungstemperatur entsprechend absenken. Besonders vorteilhaft sind hier Hilfsstoffe, die nachher recht einfach wieder abgedampft werden können, d.h. einen Siedepunkt unter 180 °C bevorzugt unter 150 °C aufweisen. Vorzugsweise kann diese Art der Herstellung in einem Extruder vorgenommen werden.

Der Extruder ist bevorzugt ein gleichläufiger Zweischneckenextruder. Die Schneckenkonfiguration kann dabei je nach Produkt unterschiedlich stark scherend sein. Es empfiehlt sich insbesondere in der Aufschmelzzone Knetelemente einzusetzen. Dabei können auch rückläufige Knetelemente eingesetzt werden. Nach der Aufschmelzzone kann eine Entgasungszone nachgeschaltet werden, die vorteilhafterweise bei Atmosphärendruck betrieben wird, gewünschtenfalls aber auch unter Vakuum betrieben werden kann.

Der Produktaustrag kann über Runddüsen mit Durchmessern von 1 bis 5 mm, vorzugsweise 2 bis 3 mm, erfolgen. Die Extruder können auch mit Düsenplatten ausgerüstet sein. Andere Düsenformen, wie Schlitzdüsen können ebenfalls eingesetzt werden, vor allem dann wenn ein größerer Materialdurchsatz angestrebt wird.

Die Extruder sind üblicherweise mit beheizbaren Zylindern ausgerüstet. Die resultierende Produkttemperatur ist jedoch vom Schergrad des eingesetzten Schneckenelements abhängig und kann mitunter 20-30 °C höher sein als die eingestellte Zylindertemperatur.

Üblicherweise eignen sich Extruder mit einer Länge von 10D bis 40D.

Prinzipiell können auch mehrere Wirkstoffbasen mit dem Polymer im Extruder zum Salz umgesetzt werden.

Die aus dem Extruder austretenden Extrudatstränge können auf an sich bekannte Weise, beispielsweise durch Abschlagtechniken zerkleinert werden.

Die resultierenden Stränge können mit einem Granulator zu Granulatkörnern verarbeitet werden und diese können wiederum weiter zu einem Pulver zerkleinert (gemahlen) werden. Das Granulat oder Pulver kann in Kapseln gefüllt oder unter Anwendung üblicher Tablettierhilfsstoffe zu Tabletten verpresst werden.

In einer besonderen Ausführung der Extrusion kann zunächst das Polymer dem Extruder zugeführt und geschmolzen werden. Über eine zweite Eingabestelle wird dann die Wirkstoffbase zugegeben. Über weitere Einzugsstellen lassen sich zusätzliche Wirkstoffbasen hinzudosieren.

Ferner ist es möglich, während der Extrusion Wasser, organische Lösungsmittel, Puffersubstanzen oder Weichmacher einzusetzen, um die Umsetzung der Wirkstoffbase mit dem sauren Polymer zu beschleunigen. Insbesondere Wasser oder flüchtige Alkohole bieten sich hierfür an. Dieses Verfahren ermöglicht die Umsetzung bei niedrigerer Temperatur. Die Lösungsmittel- und/oder Weichmachermengen liegen üblicherweise zwischen 0 und 30% der extrudierbaren Masse. Das Wasser oder Lösungsmittel kann schon durch eine Entgasungsstelle im Extruder bei Normaldruck oder durch Anlegen von Vakuum entfernt werden. Alternativ verdampfen diese Komponenten, wenn das Extrudat den Extruder verlässt und der Druck sich auf Normaldruck reduziert. Im Falle von schwerer flüchtigen Komponenten kann das Extrudat entsprechend nachgetrocknet werden.

Zwei weitere Ausführungsformen bestehen darin, dass entweder der Wirkstoff in einem Lösungsmittel gelöst wird und dem Polymer im Extruder zugeführt wird oder dass das Polymer in einem Lösungsmittel gelöst wird und dem Wirkstoff zugeführt wird.

Gemäß einer Ausführungsform des Herstellungsverfahrens wird direkt im Anschluss an die Extrusion die thermoplastische Masse zu einem tablettenähnlichen Komprimat kalandriert, welches die endgültige Darreichungsform darstellt. In dieser Variante kann es sinnvoll sein, weitere Bestandteile wir beispielsweise Polymere zur Einstellung der Glasübergangstemperatur und der Schmelzviskosität, Sprengmittel, Solubilisatoren, Weichmacher, freisetzungsbeeinflussende Hilfsstoffe, Retardierungsmittel, magensaftresistente Polymere, Farbstoffe, Geschmacksstoffe, Süßstoffe und weitere Zusatzstoffe schon vor oder während der Extrusion zuzusetzen. Prinzipiell können diese Stoffe auch verwendet werden, wenn das Extrudat zunächst zerkleinert und danach zu Tabletten verpresst wird.

Der Wassergehalt der extrudierten Produkte beträgt in der Regel unter 5 Gew.-%.

Bei der Herstellung von festen Dosierungsformen der polymeren Wirkstoffsalze können gegebenenfalls übliche pharmazeutische Hilfsstoffe mitverarbeitet werden. Dabei handelt es sich um Stoffe aus der Klasse der Füllstoffe, Weichmacher, Löslichkeitsvermittler, Bindemittel, Silikate sowie Spreng- und Adsorptionsmittel, Schmiermittel, Fließmittel, Farbstoffe, Stabilisatoren wie Antioxidantien, Netzmittel, Konservierungsmittel, Formentrennmittel, Aromen oder Süßstoffe, bevorzugt um Füllstoffe, Weichmacher und Löslichkeitsvermittler.

Als Füllstoffe können z.B. anorganische Füllstoffe wie Oxide von Magnesium, Aluminium, Silicium, Titan- oder Calciumcarbonat, Calcium- oder Magnesiumphosphate oder organische Füllstoffe wie Lactose, Saccharose, Sorbit oder Mannit zugesetzt werden.

Als Weichmacher eignen sich beispielsweise Triacetin, Triethylcitrat, Glycerolmonostearat, niedermolekulare Polyethylenglykole oder Poloxamere.

Als Löslichkeitvermittler eignen sich grenzflächenaktive Substanzen mit einem HLB-Wert (HydrophilicLipophilicBalance) größer 11, beispielsweise mit 40 EthylenoxidEinheiten ethoxyliertes hydriertes Ricinusöl (Cremophor® RH 40), mit 35 EthylenoxidEinheiten ethoxyliertes Ricinusöl (Cremophor® EL), Polysorbat 80, Poloxamere oder Natriumlaurylsulfat.

Als Schmiermittel können Stearate von Aluminium, Calcium, Magnesium und Zinn, sowie Magnesiumsilikat, Silikone und ähnliche verwendet werden.

Als Fließmittel können beispielsweise Talk oder kolloidales Siliciumdioxid eingesetzt werden.

Als Bindemittel eignet sich zum Beispiel mikrokristalline Cellulose.

Sprengmittel können quervernetztes Polyvinylpyrrolidon oder quervernetzte Natriumcarboxymethylstärke sein. Stabilisatoren können sein Ascorbinsäure oder Tocopherol.

Farbstoffe sind z.B. Eisenoxide, Titandioxid, Triphenylmethanfarbstoffe, Azofarbstoffe, Chinolinfarbstoffe, Indigotinfarbstoffe, Carotinoide, um die Darreichungsformen einzufärben, Opakisierungsmittel wie Titandioxid oder Talkum, um die Lichtdurchlässigkeit zu erhöhen und um Farbstoffe einzusparen.

Die erfindungsgemäßen polymeren Salze von Wirkstoffen lassen sich ausgezeichnet granulieren und zu Tabletten verpressen, die aufgrund der hohen Löslichkeit in wässrigen Medien eine äußerst schnelle Wirkstofffreisetzung zeigen werden. Durch die verbesserte Löslichkeit wird eine erheblich verbesserte Bioverfügbarkeit erzielt. Die Löslichkeit beträgt üblicherweise 0.05 bis 5 % (Gew.-Teile Arzneistoff/ Gew.-Teile Wasser). Zudem ist die Bioverfügbarkeit viel reproduzierbarer, d.h. es gibt geringere interindividuelle Schwankungen.

Die erfindungsgemäßen Salze lassen sich zu vielen verschiedenen Darreichungsformen formulieren, wie z. B. Tabletten, Kapseln, Granulaten, Pulvern, Drug Delivery Systemen, Lösungen, Suppositorien, transdermalen Systemen, Cremes, Gelen, Lotionen, Injektionslösungen, Tropfen, Säften und Sirupen.

### Die Erfindung wird im Folgenden durch Beispiele erläutert:

### Allgemeine Anmerkungen:

Die Molekulargewichte wurden durch Gelpermeationschromatographie (GPC) bestimmt (Eluent: THF; Standard: PMMA).
Die Säurezahlen (mg KOH/g Polymer) wurden gemäß DIN 53402 bestimmt.

Die Bestimmung der Glasübergangstemperaturen erfolgte mttels Differential Scanning Calorimetry (DSC). Dabei wurde die Probe auf - 30 °C abgekühlt und mit einer Aufheizrate von 10 K/min aufgeheizt. Ausgewertet wurde die zweite Aufheizkurve.

Unter TMP x n EO wird mit n mol Ethylenoxid alkoxyliertes Trimethylolpropan verstanden, wobei n ein Mittelwert (Zahlenmittel) sein kann.
Unter PEG 200 wird ein Polyethylenglykol mit einem mittleren Molekulargewicht von 200 g/mol verstanden.

Unter PEG 400 wird ein Polyethylenglykol mit einem mittleren Molekulargewicht von 400 g/mol verstanden.

### VE-Wasser: Vollentsalztes Wasser

Die gemäß den nachstehenden Beispielen 2 bis 10 erhaltenen Proben wurden mittels XRD (Röntgendiffraktometrie) und DSC (Differential Scanning Calorimetry) auf Kristallinität bzw. Amorphizität unter Verwendung folgender Geräte und Bedingungen untersucht:

### XRD

Messgerät: Diffraktometer D 8 Advance mit 9-fach Probenwechsler (Fa.Bruker/AXS)
Messart: θ- θ Geometrie in Reflexion
Winkelbereich 2 Theta: 2-80°
Schrittweite: 0,02°
Messzeit pro Winkelschritt: 4,8s
Divergence Slit: Göbelspiegel mit 0,4 mm Steckblende
Antiscattering Slit: Sollerspalt
Detektor: Sol-X Detektor
Temperatur: Raumtemperatur
Generatoreinstellung: 40kV/50mA

### DSC

DSC Q 2000 der Fa. TA -Instruments
Parameter:
   Einwaage ca. 8,5 mg
Heizrate: 20K/min

Die Bestimmung der Wirkstofffreisetzung erfolgte gemäß USP (Paddle Methode) 2, 37 °C, 50UpM (BTWS 600, Pharmatest) in 0,1 molarer Salzsäure für 2h. Die Detektion des freigesetzen Wirkstoffes erfolgte per UV Spektroskopie (Lamda-2, Perkin Elmer). Die gezogenen Proben wurden direkt nach der Filtration mit Methanol verdünnt, um ein Auskristallisieren des schwerlöslichen Wirkstoffes zu verhindern.

Der Zweischneckenextruder, der zur Herstellung der in den nachfolgenden Beispielen beschriebenen Formulierungen eingesetzt wurde, wies einen Schneckendurchmesser von 16 mm und eine Länge von 40D auf. Der gesamte Extruder war aus 8 einzeln temperierbaren Zylinderblöcken aufgebaut. Die ersten zwei Zylinder wurden zwecks besseren Materialeinzugs bei 20 °C bzw. bei 70 °C temperiert. Ab dem dritten Zylinder wurde eine konstante Temperatur eingestellt, die jeweils separat angegeben ist.

### Herstellung der erfindungsgemäßen Polyester

### Beispiel A

In einen 500 ml-Rundkolben, ausgestattet mit Rührer, Innenthermometer, Gaseinleitungsrohr und absteigendem Kühler mit Auffanggefäß wurden 86,3 g (0,41 mol) Zitronensäuremonohydrat und 138,9 g (1,31 mol) Diethylenglykol, sowie 0,1 g (255 ppm) Titan(IV)tetrabutylat vorgelegt. Unter Stickstoffbegasung wurde die Mischung auf 130 °C erhitzt und unter Rühren für 25 h bei dieser Temperatur gehalten, wobei freiwerdendes Reaktions- und Kristallwasser über den absteigenden Kühler abgeschieden wurde. Nach einer abgeschiedenen Wassermenge von 15 g (0,83 mol) wurde die Reaktionsmischung auf 90 °C abgekühlt und mit weiteren 166,2 g (0,79 mol) Zitronensäuremonohydrat versetzt. Die Reaktionsmischung wurde erneut auf 130 °C erhitzt und für weitere 25 h gerührt, wobei erneut 23 g (1,27 mol) Wasser abgeschieden wurden. Anschließend wurde die Reaktion durch Abkühlen auf Raumtemperatur beendet.
Das Produkt wurde in Form eines dunkelgelben wasserlöslichen Harzes erhalten. Folgende Kennzahlen wurden bestimmt:
Säurezahl = 149 mg KOH/g Polymer
Mₙ = 700 g/mol, M_{w} = 2920 g/mol

### Beispiel B

In einen 1000 ml-Rundkolben, ausgestattet mit Rührer, Innenthermometer, Gaseinleitungsrohr und absteigendem Kühler mit Auffanggefäß wurden 589,2 g (2,81 mol) Zitronensäuremonohydrat und 613,6 g (3,07 mol) PEG 200, sowie 0,5 g (400 ppm) Titan(IV)tetrabutylat vorgelegt. Unter Stickstoffbegasung wurde die Mischung auf 130 °C erhitzt und unter Rühren für 23 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:
Säurezahl = 169 mg KOH/g Polymer
Mₙ = 1560 g/mol, M_{w} = 12410 g/mol

### Beispiel C

In einen 500 ml-Rundkolben, ausgestattet mit Rührer, Innenthermometer, Gaseinleitungsrohr und absteigendem Kühler mit Auffanggefäß wurden 122,4 g (0,58 mol) Zitronensäuremonohydrat und 127,6 g (0,64 mol) PEG 200, sowie 0,1 g (400 ppm) Titan(IV)tetrabutylat vorgelegt. Unter Stickstoffbegasung wurde die Mischung auf 130 °C erhitzt und unter Rühren bei dieser Temperatur gehalten, wobei freiwerdendes Reaktions- und Kristallwasser über den absteigenden Kühler abgeschieden wurde. Nach einer Reaktionszeit von 20 h und einer abgeschiedenen Wassermenge von 18 g (1,0 mol) wurde die Reaktion durch Abkühlen auf Raumtemperatur beendet.
Das Produkt wurde in Form eines gelbgefärbten wasserlöslichen Harzes erhalten. Folgende Kennzahlen wurden bestimmt:
Säurezahl = 167 mg KOH/g Polymer
Mₙ = 1030 g/mol, M_{w} = 7000 g/mol

### Beispiel D

In einen 500 ml-Rundkolben, ausgestattet mit Rührer, Innenthermometer, Gaseinleitungsrohr und absteigendem Kühler mit Auffanggefäß wurden 95,0 g (0,45 mol) Zitronensäuremonohydrat und 156,1 g (0,39 mol) PEG 400, sowie 0,1 g (400 ppm) Titan(IV)tetrabutylat vorgelegt. Unter Stickstoffbegasung wurde die Mischung auf 130 °C erhitzt und unter Rühren für 7,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines farblosen wasserlöslichen Harzes erhalten. Folgende Kennzahlen wurden bestimmt:
Säurezahl = 168 mg KOH/g Polymer
Mₙ = 1020 g/mol, M_{w} = 4300 g/mol

### Beispiel E

In einen 500 ml-Rundkolben, ausgestattet mit Rührer, Innenthermometer, Gaseinleitungsrohr und absteigendem Kühler mit Auffanggefäß wurden 97,6 g (0,47 mol) Zitronensäuremonohydrat und 202,3 g (0,51 mol) PEG 400, sowie 0,1 g (330 ppm) Titan(IV)tetrabutylat vorgelegt. Unter Stickstoffbegasung wurde die Mischung auf 130 °C erhitzt und unter Rühren für 24 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:
Säurezahl = 138 mg KOH/g Polymer
Mₙ = 1440 g/mol, M_{w} = 4310 g/mol

### Beispiel F

In einen 500 ml-Rundkolben, ausgestattet mit Rührer, Innenthermometer, Gaseinleitungsrohr und absteigendem Kühler mit Auffanggefäß wurden 75,4 g (0,36 mol) Zitronensäuremonohydrat und 176,2 g (0,26 mol) TMP x 12 EO, sowie 0,1 g (400 ppm) Titan(IV)tetrabutylat vorgelegt. Unter Stickstoffbegasung wurde die Mischung auf 130 °C erhitzt und unter Rühren für 8,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:
Säurezahl = 133 mg KOH/g Polymer
Mₙ = 3390 g/mol, M_{w} = 14420 g/mol

### Beispiel G

In einen 500 ml-Rundkolben, ausgestattet mit Rührer, Innenthermometer, Gaseinleitungsrohr und absteigendem Kühler mit Auffanggefäß wurden 76,1 g (0,36 mol) Zitronensäuremonohydrat und 176,5 g (0,26 mol) TMP x 12 EO, sowie 0,1 g (400 ppm) Titan(IV)tetrabutylat vorgelegt. Unter Stickstoffbegasung wurde die Mischung auf 130 °C erhitzt und unter Rühren für 4,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines farblosen wasserlöslichen Harzes erhalten. Folgende Kennzahlen wurden bestimmt:
Säurezahl = 132 mg KOH/g Polymer
Mₙ = 3470 g/mol, M_{w} = 18230 g/mol

### Beispiel H

In einen 500 ml-Rundkolben, ausgestattet mit Rührer, Innenthermometer, Gaseinleitungsrohr und absteigendem Kühler mit Auffanggefäß wurden 82,0 g (0,39 mol) Zitronensäuremonohydrat und 168,8 g (0,25 mol) TMP x 12 EO, sowie 0,1 g (400 ppm) Titan(IV)tetrabutylat vorgelegt. Unter Stickstoffbegasung wurde die Mischung auf 130 °C erhitzt und unter Rühren für 3,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines farblosen Harzes erhalten.
Folgende Kennzahlen wurden bestimmt:
Säurezahl = 157 mg KOH/g Polymer
Mₙ = 2920 g/mol, M_{w} = 11050 g/mol

### Beispiel I

In einen 2000 ml-Rundkolben, ausgestattet mit Rührer, Innenthermometer, Gaseinleitungsrohr und absteigendem Kühler mit Auffanggefäß wurden 393,6 g (1,87 mol) Zitronensäuremonohydrat und 809,6 g (1,21 mol) TMP x 12 EO, sowie 0,35 g (300 ppm) Titan(IV)tetrabutylat vorgelegt. Unter Stickstoffbegasung wurde die Mischung auf 130 °C erhitzt und unter Rühren für 16 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelblichen wasserlöslichen Harzes erhalten. Folgende Kennzahlen wurden bestimmt:
Säurezahl = 152 mg KOH/g Polymer
Mₙ = 870 g/mol, M_{w} = 12900 g/mol
T_{g} = -30 °C.

### Beispiel J

In einen 500 ml-Rundkolben, ausgestattet mit Rührer, Innenthermometer, Gaseinleitungsrohr und absteigendem Kühler mit Auffanggefäß wurden 105,9 g (0,50 mol) Zitronensäuremonohydrat und 211,1 g (0,32 mol) TMP x 12 EO, sowie 0,1 g (300 ppm) Titan(IV)tetrabutylat vorgelegt. Unter Stickstoffbegasung wurde die Mischung auf 130 °C erhitzt und unter Rühren für 11,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:
Säurezahl = 159 mg KOH/g Polymer
Mₙ = 970 g/mol, M_{w} = 12270 g/mol

### Vergleichsbeispiel 1

In einen 500 ml-Rundkolben, ausgestattet mit Rührer, Innenthermometer Gaseinleitungsrohr und absteigendem Kühler mit Auffanggefäß wurden 70,9 g (0,60 mol) Bemsteinsäure, 155,0 g (0,50 mol) TMP x 5 EO und 0,1 g Dibutylzinndilaurat vorgelegt. Die Reaktionsmischung wurde auf 180 °C erhitzt und unter Rühren so lange bei diesen Bedingungen gehalten, bis die Säurezahl des Reaktionsgemisches auf 54 mg KOH/g Polymer gefallen war. Dann wurden weitere 67 g (0,22 mol) TM P x 5 EO zugeben und die Reaktion bei 180 °C weitergefahren, bis das Reaktionsgemisch eine Säurezahl von 38 mg KOH/g Polymer erreicht hatte. Die Reaktion wurde durch Abkühlen auf Raumtemperatur beendet.
Das Produkt wurde in Form eines dunkelgelben wasserlöslichen Harzes erhalten. Folgende Kennzahlen wurden bestimmt:
Säurezahl = 38 mg KOH/g Polymer
Mₙ = 170 g/mol, M_{w} = 9380 g/mol

### Vergleichsbeispiel 2

In einen 500 ml-Rundkolben, ausgestattet mit Rührer, Innenthermometer Gaseinleitungsrohr und absteigendem Kühler mit Auffanggefäß wurden 87,7 g (0,60 mol) Adipinsäure, 155,0 g (0,50 mol) TMP x 5 EO und 0,1 g Dibutylzinndilaurat vorgelegt. Die Reaktionsmischung wurde auf 180 °C erhitzt und unter Rühren so lange bei diesen Bedingungen gehalten, bis die Säurezahl des Reaktionsgemisches auf 62 mg KOH/g Polymer gefallen war. Dann wurden weitere 81 g (0,26 mol) TMP x 5 EO zugeben und die Reaktion bei 180 °C weitergefahren, bis das Reaktionsgemisch eine Säurezahl von 32 mg KOH/g Polymer erreicht hatte. Die Reaktion wurde durch Abkühlen auf Raumtemperatur beendet.
Das Produkt wurde in Form eines dunkelgelben wasserlöslichen Harzes erhalten. Folgende Kennzahlen wurden bestimmt:
Säurezahl = 32 mg KOH/g Polymer
Mₙ = 170 g/mol, M_{w} = 5530 g/mol

### Vergleichsbeispiel 3

In einen 500 ml-Rundkolben, ausgestattet mit Rührer; Innenthermometer Gaseinleitungsrohr und absteigendem Kühler mit Auffanggefäß wurden 212,6 g (1,80 mol) Bernsteinsäure, 138,8 g (1,50 mol) Glycerin und 0,1 g Dibutylzinndilaurat vorgelegt. Die Reaktionsmischung wurde auf 150 - 180 °C erhitzt und unter Rühren so lange bei diesen Bedingungen gehalten, bis die Säurezahl des Reaktionsgemisches auf 150 mg KOH/g Polymer gefallen war. Dann wurden weitere 115 g (1,25 mol) Glycerin zugeben und die Reaktion bei 150 - 180 °C weitergefahren, bis das Reaktionsgemisch eine Säurezahl von 44 mg KOH/g Polymer erreicht hatte. Die Reaktion wurde durch Abkühlen auf Raumtemperatur beendet.
Das Produkt wurde in Form eines hellgelben wasserlöslichen Harzes erhalten. Folgende Kennzahlen wurden bestimmt:
Säurezahl = 44 mg KOH/g Polymer
Mₙ = 860 g/mol, M_{w} = 3570 g/mol

### Vergleichsbeispiel 4

In einen 1000 ml-Rundkolben, ausgestattet mit Rührer, Innenthermometer und Vakuumanschluss mit nachgeschalteter Kühlfalle wurden 87,5 g (0,60 mol) Adipinsäure, 335 g (0,50 mol) TMP 12 EO und 0,2 g 2%ige H₂SO₄ vorgelegt. Die Reaktionsmischung wurde auf 150 °C erhitzt, auf unter 200 mbar evakuiert und unter Rühren so lange bei diesen Bedingungen gehalten, bis die Säurezahl des Reaktionsgemisches auf 50 mg KOH/g Polymer gefallen war. Dann wurden weitere 251,5 g (0,38 mol) TMP x 12 EO zugeben und die Reaktion unter vollem Vakuum so lange bei 150-170 °C weitergefahren, bis die Reaktionsmischung eine Säurezahl von 20 erreicht hatte. Die Reaktion wurde durch Abkühlen auf Raumtemperatur beendet.
Das Produkt wurde in Form eines farblosen wasserlöslichen Harzes erhalten. Folgende Kennzahlen wurden bestimmt:
Säurezahl = 19 mg KOH/g Polymer
Mₙ = 890 g/mol, M_{w} = 3600 g/mol

### Vergleichsbeispiel 5

In einen 500 ml-Rundkolben, ausgestattet mit Rührer, Innenthermometer, und Vakuumanschluss mit nachgeschalteter Kühlfalle wurden 70,9 g (0,60 mol) Bernsteinsäure, 333,4 g (0,50 mol) TMP x 12 EO und 0,2 g 2%ige H₂SO₄ vorgelegt. Die Reaktionsmischung wurde auf 150 °C erhitzt, auf unter 200 mbar evakuiert und unter Rühren so lange bei diesen Bedingungen gehalten, bis die Säurezahl des Reaktionsgemisches auf 30 mg KOH/g Polymer gefallen war. Dann wurden weitere 88 g (0,13 mol) TM P 12 EO zugeben und die Reaktion unter vollem Vakuum so lange bei 150 °C weitergefahren, bis die Reaktionsmischung eine Säurezahl von 20 erreicht hatte. Die Reaktion wurde durch Abkühlen auf Raumtemperatur beendet.
Das Produkt wurde in Form eines farblosen wasserlöslichen Harzes erhalten. Folgende Kennzahlen wurden bestimmt:
Säurezahl = 20 mg KOH/g Polymer
Mₙ = 1630 g/mol, M_{w} = 12990 g/mol

### Anwendungsbeispiele: Solubilisierungswirkung

### Beispiel 1:

Zur Erhöhung der Löslichkeit der schwerlöslichen Wirkstoffe wurden 40mL einer 15% Polymerlösung (in VE-Wasser) angesetzt. Diese Lösung wurde mit einem Überschuss an schwerlöslichem Wirkstoff (Cinnarizin, Famotidin, Loperamid, Haloperidol, Ketokonazol bzw. Clotrimazol) versetzt und für 72h bei Raumtemperatur gerührt. Löste sich der zugegebene Wirkstoff, so wurde erneut Wirkstoff zur Übersättigung zugegeben und für weitere 72h lang gerührt. Die resultierende Suspension wurde durch ein 0,45µm Membranfilter filtriert und der gelöste Wirkstoffanteil wurde mittels UV/Vis- Spektroskopie bestimmt. Das gleiche Verfahren wurde auch für die Wirkstoffe alleine durchgeführt, um die Löslichkeit des puren Wirkstoffs zu bestimmen und die Verbesserung durch Salzbildung ermitteln zu können. Zum Vergleich wurde auch die Löslichkeit in 0,1 normaler HCl bestimmt, die die Löslichkeit des Hydrochloridsalzes der entsprechenden Base darstellt.

Die Ergebnisse sind in der nachstehenden Tabelle aufgeführt.

| | | Sättigung in 15 %iger Polymerlösung [g/100mL] | | | | | |
|---|---|---|---|---|---|---|---|
| Polymer | Zusammensetzung | Cinnarizin | Famotidin | Loperamid | Haloperidol | Ketoconazol | Clotrimazol |
| - | VE-Wasser | <0.001 | 0,100 | 0,007 | | | |
| - | 0,1 N HCl | 0,174 | 3,210 | 0,020 | | | |
| - | Cremophor EL zum Vergleich | 0,11 | 0,46 | 0,01 | | | |
| - | Solutol HS 15 zum Vergleich | 0,06 | 0,41 | 0,06 | | | |
| | | | | | | | |
| A | ZS : DEG | 0,76 | 7,39 | 4,34 | | | |
| C | ZS : PEG 200 | 1,58 | 13,39 | 2,37 | | | |
| B | ZS : PEG 200 | 1,35 | | 4,49 | | | |
| C | ZS : PEG 200 | 1,40 | 11,65 | 2,34 | | | |
| D | ZS : PEG 400 | 1,41 | 13,39 | 1,67 | | | |
| E | ZS : PEG 400 | 1,30 | 12,33 | 1,64 | | | |
| F | ZS : TMP12EO | 2,06 | 10,23 | 2,84 | | | |
| G | ZS : TMP12EO | 4,60 | 9,17 | 2,89 | 3,45 | 5,38 | 0,67 |
| H | ZS : TMP12EO | 2,53 | 10,25 | 2,70 | 2,77 | 6,16 | 0,84 |
| I | ZS : TMP12EO | 3,98 | 9,40 | 2,71 | | | |
| J | ZS : TMP12EO | 4,88 | 9,89 | 2,90 | | | |

| Vergleichsbeispiele | | | | | | | |
|---|---|---|---|---|---|---|---|
| 1 | BS: Gly5EO | 0,26 | 4,13 | 1,44 | | | |
| 2 | ADS : Gly5EO | 0,26 | 3,72 | 1,55 | | | |
| 3 | BS : Gly | 0,32 | 4,47 | 2,18 | | | |
| 4 | ADS : TMP12EO | 0,16 | 2,55 | 0,93 | | | |
| 5 | BS : TMP12EO | 0,24 | 2,63 | 1,23 | | | |

### Beispiel 2

### Herstellung eines Salzes aus Loperamid und Polymer B durch Extrusion

4500 g Polymer B und 500 g Loperamid wurden in einen Behälter eingewogen und 10 Minuten im Turbula-Mischer T10B gemischt.

Die Mischung wurde bei folgenden Parametern extrudiert:
Zonentemperatur 1. Zylinder: 20 °C; 2. Zylinder: 40 °C
Zonentemperatur ab dem 3. Zylinder: 110 °C
Schneckendrehzahl 200 UpM
Durchsatz: 500 g/h
Düsendurchmesser 3mm

Die zerkleinerten Extrudate wurden mit XRD und per DSC untersucht und als amorph befunden. Nach 40 Minuten in VE-Wasser waren 90 % Wirkstoff freigesetzt.

### Beispiel 3

### Herstellung eines Salzes aus Loperamid und Polymer E durch Extrusion

4500 g Polymer E und 500 g Loperamid wurden in einen Behälter eingewogen und 10 Minuten im Turbula- Mischer T10B gemischt.
Die Mischung wurde bei folgenden Parametern extrudiert:
Zonentemperatur 1. Zylinder: 20 °C; 2. Zylinder: 40 °C
Zonentemperatur ab dem 3. Zylinder: 140 °C
Schneckendrehzahl 200 UpM
Durchsatz: 500 g/h
Düsendurchmesser 3mm

Die zerkleinerten Extrudate wurden mit XRD und per DSC untersucht und als amorph befunden. Nach 60 Minuten in VE-Wasser waren 100 % Wirkstoff freigesetzt.

### Beispiel 4

### Herstellung eines Salzes aus Haloperidol und Polymer G durch Extrusion

4500 g Polymer G und 500 g Haloperidol wurden in einen Behälter eingewogen und 10 Minuten im Turbula- Mischer T10B gemischt.

Die Mischung wurde bei folgenden Parametern extrudiert:
Zonentemperatur 1. Zylinder: 20 °C; 2. Zylinder: 40 °C
Zonentemperatur ab dem 3. Zylinder: 135 °C
Schneckendrehzahl 200 UpM
Durchsatz: 500 g/h
Düsendurchmesser 3mm

Die zerkleinerten Extrudate wurden mit XRD und per DSC untersucht und als amorph befunden. Nach 37 Minuten in VE-Wasser waren 98 % Wirkstoff freigesetzt.

### Beispiel 5

### Herstellung eines Salzes aus Famotidin und Polymer D durch Extrusion

4500 g Polymer D und 500 g Famotidin wurden in einen Behälter eingewogen und 10 Minuten im Turbula- Mischer T10B gemischt.

Die Mischung wurde bei folgenden Parametern extrudiert:
Zonentemperatur 1. Zylinder: 20 °C; 2. Zylinder: 40 °C
Zonentemperatur ab dem 3. Zylinder: 138 °C
Schneckendrehzahl 200 UpM
Durchsatz: 500 g/h
Düsendurchmesser 3mm

Die zerkleinerten Extrudate wurden mit XRD und per DSC untersucht und als amorph befunden. Nach 30 Minuten in VE-Wasser waren 100 % Wirkstoff freigesetzt.

### Beispiel 6

### Herstellung eines Salzes aus Cinnarizin und Polymer G durch Extrusion

4500 g Polymer G und 500 g Cinnarizin wurden in einen Behälter eingewogen und 10 Minuten im TurbulaMischer T10B gemischt.

Die Mischung wurde bei folgenden Parametern extrudiert:
Zonentemperatur 1. Zylinder: 20 °C; 2. Zylinder: 40 °C
Zonentemperatur ab dem 3. Zylinder: 110 °C
Schneckendrehzahl 200 UpM
Durchsatz: 500 g/h
Düsendurchmesser 3 mm

Die zerkleinerten Extrudate wurden mit XRD und per DSC untersucht und als amorph befunden. Nach 40 Minuten in VE-Wasser waren 90 % Wirkstoff freigesetzt.

### Beispiel 7

### Herstellung eines Salzes aus Ketokonazol und Polymer H durch Lösen in einem organischen Lösungsmittel und anschließendes Evaporieren

5 g Ketokonazol wurden in 150 g einer 30 %igen Lösung von Polymer H in Ethanol unter Rühren 2 h gelöst. Diese Lösung wurde im Rotationsverdampfer bei 80 °C bis zur Trockene eingedampft. Der erhaltene röntgenamorphe Feststoff wurde anschließend zu einem Pulver gemahlen.
Produkteigenschaften: Restfeuchte: 1,4 % (g/g)
Löslichkeit des polymeren Ketokonazolsalzes in
Wasser gemessen als gelöstes Ketokonazol: 7 g/100mL

### Beispiel 8

### Herstellung eines Salzes aus Famotidin und Polymer E durch Lösen in einem organischen Lösungsmittel und anschließendes Evaporieren

10g Famotidin wurden in 150g einer 30 %igen Lösung von Polymer E in Ethanol unter Rühren 2h gelöst. Diese Lösung wurde am Rotavapor bei 80 °C bis zur Trockene eingedampft. Der erhaltene Feststoff wurde anschließend zerkleinert.
Produkteigenschaften: Restfeuchte: 1,6 % (g/g)
Löslichkeit des polymeren Famotidinsalzes in
Wasser gemessen als gelöstes Famotidin: 13 g/100mL

### Beispiel 9

### Herstellung eines Salzes aus Loperamid und Polymer G durch Extrusion

4500 g Polymer G und 500g Loperamid wurden in einen Behälter eingewogen und 10 Minuten im Turbula Mischer T10B gemischt.

Die Mischung wurde bei folgenden Parametern extrudiert:
Zonentemperatur 1. Zylinder: 20°C; 2. Zylinder: 40 °C
Zonentemperatur ab dem 3. Zylinder: 120 °C
Schneckendrehzahl 200 UpM
Durchsatz: 500 g/h
Düsendurchmesser 3mm

Die zerkleinerten Extrudate wurden mit XRD und per DSC untersucht und als amorph befunden. Nach 1 h in VE-Wasser waren 95 % Wirkstoff freigesetzt.

### Beispiel 10

4500g Polymer G und 500 g Haloperidol wurden in einen Behälter eingewogen und 10 Minuten im Turbula Mischer T10B gemischt.

Die Mischung wurde bei folgenden Parametern extrudiert:
Zonentemperatur 1. Zylinder: 20°C; 2. Zylinder: 40 °C
Zonentemperatur ab dem 3. Zylinder: 130 °C
Schneckendrehzahl 200 UpM
Durchsatz: 500 g/h
Düsendurchmesser 3 mm

Die zerkleinerten Extrudate wurden mit XRD und per DSC untersucht und als amorph befunden. Nach 40 Minuten in VE-Wasser waren 99 % Wirkstoff freigesetzt.

### Beispiel 11

### Herstellung von Tabletten mit einem polymeren Salz aus Ketokonazol und Polymer H

17 g polymeres Ketokonazolsalz aus Beispiel 7 wurden mit 150 g mikrokristalliner Cellulose, 118 g Dicalciumphosphat, 12g Kollidon CL-F und 3 g Magnesiumstearat gemischt und auf einer Excentertablettenpresse zu Tabletten mit folgenden Eigenschaften verpresst:
Durchmesser: 10 mm,
Gewicht: 300 mg
Bruchfestigkeit: 78 N
Zerfall: 29 s
Wirkstofffreisetzung in VE-Wasser: 99 % nach 15 min.

### Beispiel 12

### Herstellung von Tabletten mit einem polymeren Salz aus Haloperidol und Polymer G

65 g polymeres Haloperidolsalz aus Beispiel 4 wurden mit 110 g mikrokristalliner Cellulose, 110 g Dicalciumphosphat, 12 g Kollidon CL-F und 3 g Magnesiumstearat gemischt und auf einer Rundläufertablettenpresse zu Tabletten mit folgenden Eigenschaften verpresst.
Durchmesser: 10 mm
Gewicht: 300 mg
Bruchfestigkeit: 80 N
Zerfall: 58 s
Wirkstofffreisetzung in Wasser: 87 % nach 15 min

### Beispiel 13

### Herstellung eines polymeren Salzes mittels Filmextrusion

1200 g Polymer Dund 400 g Clotrimazol wurden in einen Behälter eingewogen und 10 Minuten im Turbula Mischer T10B gemischt.

Die Mischung wurde unter folgenden Bedingungen extrudiert:
Zonentemperatur 1. Zylinder: 20 °C; 2. Zylinder: 40 °C
Zonentemperatur ab dem 3. Zylinder: 140 °C
Schneckendrehzahl 200 UpM
Durchsatz: 300 g/h

Der resultierende Film hatte eine Dicke von 120 µm und zeigt eine Reißdehnung von 3,7 %. Die Anlösezeit in VE-Wasser betrug 20 Sekunden.

### Beispiel 14

### Herstellung eines polymeren Salzes aus Ketoconazol und Polymer I mittels Filmextrusion

1200 g Polymer I und 400 g Ketokonazol wurden in einen Behälter eingewogen und 10 Minuten im Turbula Mischer T10B gemischt.

Die Mischung wurde unter folgenden Bedingungen extrudiert:
Zonentemperatur 1. Zylinder: 20 °C; 2. Zylinder: 40 °C
Zonentemperatur ab dem 3. Zylinder: 135 °C
Schneckendrehzahl 200 UpM
Durchsatz: 200 g/h

Der resultierende Film hatte eine Dicke von 168 µm und zeigt eine Reißdehnung von 3,8 %. Die Anlösezeit in VE-Wasser betrug 38 Sekunden.

### Beispiel 15

### Herstellung eines polymeren Salzes aus Ketoconazol und Polymer I durch Evaporieren

200 g Polymer I und 50 g Ketokonazol wurden in einem Methanol/Wasser Gemisch gelöst. Die Lösung wurde auf Kautschukplatte ausgegossen und unter Vakuum bei 40 °C getrocknet.

Der resultierende Film hatte eine Dicke von 108 µm und zeigt eine Reißdehnung von 5,8 %. Die Anlösezeit in VE-Wasser betrug 18 Sekunden.

### Beispiel 16

### Herstellung eines polymeren Salzes aus Clotrimazol und Polymer G als Überzug von Trägerpellets (Nonpareilles)

Die Trägerpellets wurden im Wirbelschichtgerät vorgelegt und mit einer ethanolischen Lösung aus Polymer und Wirkstoff besprüht.

| Zusammensetzung | Menge |
|---|---|
| Polymer G | 400 g |
| Clotrimazol | 100 g |
| Saccharose Pellets | 1000 g |

Wirbelschichtgranulator Glatt GPCG 3.1:

| Prozessparameter | Werte |
|---|---|
| Volumenstrom [m³/h] | 140 |
| Zulufttemperatur [°C] | 65 |
| Sprühluftdruck [MPa] | 0,40 |

### Die XRD Analyse zeigte keine kristallinen Wirkstoffanteile.

Die Freisetzung des Wirkstoffs aus 400mg Pellets wurde in einer USP Apparatur 2 in 700mL VE-Wasser durchgeführt. Nach 60 Minuten waren 90 % des Wirkstoffs freigesetzt.

### Beispiel 17

### Herstellung eines polymeren Salzes aus Cinnarizin und Polymer J als Überzug von Trägerpellets (Nonpareilles)

Die Trägerpellets wurden im Wirbelschichtgerät vorgelegt und besprüht mit einer ethanolischen Lösung aus Polymer und Wirkstoff.

| Zusammensetzung | Menge |
|---|---|
| Polymer J | 1600 g |
| Cinnarizin | 400 g |
| Saccharose Pellets | 1000 g |

Wirbelschichtgranulator Glatt GPCG 3.1:

| Prozessparameter | Werte |
|---|---|
| Volumenstrom [m³/h] | 140 |
| Zulufttemperatur [°C] | 60 |
| Sprühluftdruck [bar] | 4,0 |

Die XRD Analyse zeigte keine kristallinen Wirkstoffanteile.

Die Freisetzung des Wirkstoffs aus 400mg Pellets wurde in einer USP Apparatur 2 in 700mL VE-Wasser durchgeführt. Nach 60 Minuten waren 90 % des Wirkstoffs freigesetzt.

## Patentansprüche

1. Verwendung von verzweigten Polyestern erhalten durch Polykondensation von Zitronensäure mit mindestens einem Polyalkohol mit mindestens zwei Hydroxylgruppen und gegebenenfalls weiteren Polycarbonsäurekomponenten, wobei das Molverhältnis von Zitronensäure zu Polyalkohol 2,4:1 bis 1:3 beträgt, als Lösüchkeitsverbesserer für in Wasser schwerlösliche Substanzen.

2. Verwendung nach Anspruch 1, wobei das Molverhältnis Zitronensäure zu Polyalkohol 2,4:1 bis 1:2,4 beträgt.

3. Verwendung nach Anspruch 1, wobei das Molverhältnis Zitronensäure zu Polyalkohol 2:1 bis 1:2 beträgt.

4. Verwendung nach einem der Ansprüche 1 bis 3, wobei als Polyalkohole Verbindungen mit mindestens zwei Hydroxylgruppen oder Gemische von Verbindungen mit mindestens zwei Hydroxylgruppen eingesetzt werden.

5. Verwendung nach einem der Ansprüche 1 bis 4, wobei als Polyalkohole Umsetzungsprodukte von Verbindungen mit mindestens zwei Hydroxylgruppen und Ethylenoxid oder Propylenoxid oder mit Gemischen von Ethylenoxid und Propylenoxid oder Gemische solcher Umsetzungsprodukte eingesetzt werden.

6. Verwendung nach einem der Ansprüche 1 bis 5, wobei als Polyalkohole Glycerin, Diglycerin, Triglycerin, Trimethylolethan, Trimethylolpropan, Di(trimethylolpropan), 1,2,4-Butantriol, 1,2,6-Hexantriol, Pentaerythrit, sowie deren Umsetzungsprodukte mit Ethylenoxid oder Propylenoxid oder mit Gemischen von Ethylenoxid und Propylenoxid sowie Gemische solcher Umsetzungsprodukte eingesetzt werden.

7. Verwendung nach einem der Ansprüche 1 bis 6, wobei als Polyalkohole Polyethylenglykole mit Molekulargewichten von 150 bis 1500 g/mol eingesetzt werden.

8. Verwendung nach einem der Ansprüche 1 bis 7, wobei der molare Anteil an gegebenenfalls weiteren Polycarbonsäurekomponenten kleiner ist, als der Anteil an Zitronensäure.

9. Verwendung nach einem der Ansprüche 1 bis 8, wobei die Verwendung Molekulargewichte Mₙ von 500 bis 5000, bevorzugt 1000 bis 5000 g/mol aufweisen.

10. Verwendung nach einem der Ansprüche 1 bis 9, wobei die Verwendung Molekulargewichte Mwvon 1500 bis 50000 g/mol, bevorzugt 2000 bis 30000 g/mol aufweisen.

11. Verwendung nach einem der Ansprüche 1 bis 10, wobei die Polyester Säurezahlen von 60 bis 600 mg KOH/ g Polymer, vorzugsweise 80 bis 500 mg KOH/g Polymer aufweisen.

12. Verwendung nach einem der Ansprüche 1 bis 11, wobei die in Wasser schwerlöslichen Substanzen basische funktionelle Gruppen tragen.

13. Verwendung nach Anspruch 12, wobei die Löslichkeitsverbesserung dadurch erfolgt, dass zwischen schwerlöslicher Substanz und Polyester ein Salz oder eine salzartige Struktur gebildet wird.

14. Verwendung nach einem der Ansprüche 1 bis 13, wobei die in Wasser schwerlöslichen Substanzen biologisch aktive Substanzen oder Effektstoffe sein können.

15. Verwendung nach einem der Ansprüche 1 bis 14 wobei als biologisch aktive Substanzen pharmazeutische, kosmetische, agrochemische, diätetische Wirkstoffe oder Nahrungsergänzungsmittel verwendet werden.

16. Verwendung nach einem der Ansprüche 1 bis 15, zur Herstellung von Darreichungsformen.

17. Verfahren zur Herstellung von polymeren Salzen basischer Wirkstoffe, **dadurch gekennzeichnet, dass** eine Mischung aus Wirkstoffen und verzweigten Polyestern hergestellt wird, wobei die verzweigten Polyester durch Polykondensation von Zitronensäure mit mindestens einem Polyalkohol mit mindestens zwei Hydroxylgruppen und gegebenenfalls weiteren Polycarbonsäurekomponenten erhalten werden, wobei das Molverhältnis von Zitronensäure zu Polyalkohol 2,4:1 bis 1:3 beträgt, und die Mischung über die Glasübergangstemperatur des Polymers oder über den Schmelzpunkt des Polymers erhitzt wird oder dass die Mischung in Form einer Lösung hergestellt wird und anschliessend vom Lösungsmittel befreit wird.

## Claims

1. The use of branched polyesters obtained by polycondensation of citric acid with at least one polyalcohol having at least two hydroxyl groups and, if desired, further polycarboxylic acid components, the molar ratio of citric acid to polyalcohol being 2.4:1 to 1:3, as solubility improvers for substances of low solubility in water.

2. The use according to claim 1, the molar ratio of citric acid to polyalcohol being 2.4:1 to 1:2.4.

3. The use according to claim 1, the molar ratio of citric acid to polyalcohol being 2:1 to 1:2.

4. The use according to any of claims 1 to 3, polyalcohols used being compounds having at least two hydroxyl groups or mixtures of compounds having at least two hydroxyl groups.

5. The use according to any of claims 1 to 4, polyalcohols used being reaction products of compounds having at least two hydroxyl groups and ethylene oxide or propylene oxide, or with mixtures of ethylene oxide and propylene oxide, or mixtures of such reaction products.

6. The use according to any of claims 1 to 5, polyalcohols used being glycerol, diglycerol, triglycerol, trimethylolethane, trimethylolpropane, di(trimethylolpropane), 1,2,4-butanetriol, 1,2,6-hexanetriol, pentaerythritol, and also the reaction products thereof wtih ethylene oxide or propylene oxide or with mixtures of ethylene oxide and propylene oxide, and also mixtures of such reaction products.

7. The use according to any of claims 1 to 6, polyalcohols used being polyethylene glycols having molecular weights of 150 to 1500 g/mol.

8. The use according to any of claims 1 to 7, the molar fraction of any other polycarboxylic acid components being smaller than the fraction of citric acid.

9. The use according to any of claims 1 to 8, the polyesters having a molecular weight Mₙ of 500 to 5000, preferably 1000 to 5000 g/mol.

10. The use according to any of claims 1 to 9, the polyesters having a molecular weight M_{w} of 1500 to 50 000 g/mol, preferably 2000 to 30 000 g/mol.

11. The use according to any of claims 1 to 10, the polyesters having an acid number of 60 to 600 mg KOH/g polymer, preferably 80 to 500 mg KOH/g polymer.

12. The use according to any of claims 1 to 11, the substances of low solubility in water carrying basic functional groups.

13. The use according to claim 12, the solubility improvement being accomplished by the formation, between substance of low solubility and polyester, of a salt or a saltlike structure.

14. The use according to any of claims 1 to 13, the substances of low solubility in water possibly being bioactive substances or effect substances.

15. The use according to any of claims 1 to 14, bioactive substances used being active pharmaceutical, cosmetic, agrochemical or dietetic ingredients or nutritional supplements.

16. The use according to any of claims 1 to 15, for producing presentation forms.

17. A process for preparing a polymeric salt of a basic active ingredient, which comprises preparing a mixture of active ingredient and branched polyesters, the branched polyesters being obtained by polycondensation of citric acid with at least one polyalcohol having at least two hydroxyl groups and, if desired, further polycarboxylic acid components, the molar ratio of citric acid to polyalcohol being 2.4:1 to 1:3, and the mixture being heated above the glass transition temperature of the polymer or above the melting point of the polymer, or comprises preparing the mixture in the form of a solution and then freeing the solution from the solvent.

## Revendications

1. Utilisation de polyesters ramifiés obtenus par polycondensation d'acide citrique avec au moins un polyalcool contenant au moins deux groupes hydroxyle et éventuellement des composants acide polycarboxylique supplémentaires, le rapport en moles entre l'acide citrique et le polyalcool étant de 2,4:1 à 1:3, en tant qu'agent améliorant la solubilité pour des substances difficilement solubles dans l'eau.

2. Utilisation selon la revendication 1, dans laquelle le rapport molaire entre l'acide citrique et le polyalcool est de 2,4:1 à 1:2,4.

3. Utilisation selon la revendication 1, dans laquelle le rapport molaire entre l'acide citrique et le polyalcool est de 2:1 à 1:2.

4. Utilisation selon l'une quelconque des revendications 1 à 3, dans laquelle des composés contenant au moins deux groupes hydroxyle ou des mélanges de composés contenant au moins deux groupes hydroxyle sont utilisés en tant que polyalcools.

5. Utilisation selon l'une quelconque des revendications 1 à 4, dans laquelle des produits de réaction de composés contenant au moins deux groupes hydroxyle et d'oxyde d'éthylène ou d'oxyde de propylène ou avec des mélanges d'oxyde d'éthylène et d'oxyde de propylène ou des mélanges de tels produits de réaction sont utilisés en tant que polyalcools.

6. Utilisation selon l'une quelconque des revendications 1 à 5, dans laquelle de la glycérine, de la diglycérine, de la triglycérine, du triméthyloléthane, du triméthylolpropane, du di(triméthylolpropane), du 1,2,4-butanetriol, du 1,2,6-hexanetriol, de la pentaérythrite, ainsi que leurs produits de réaction avec de l'oxyde d'éthylène ou de l'oxyde de propylène ou avec des mélanges d'oxyde d'éthylène et d'oxyde de propylène, ainsi que des mélanges de tels produits de réaction sont utilisés en tant que polyalcools.

7. Utilisation selon l'une quelconque des revendications 1 à 6, dans laquelle des polyéthylène glycols ayant des poids moléculaires de 150 à 1 500 g/mol sont utilisés en tant que polyalcools.

8. Utilisation selon l'une quelconque des revendications 1 à 7, dans laquelle la proportion molaire de composants acide polycarboxylique supplémentaires éventuels est inférieure à la proportion d'acide citrique.

9. Utilisation selon l'une quelconque des revendications 1 à 8, dans laquelle les polyesters présentent des poids moléculaires Mₙ de 500 à 5 000, de préférence de 1 000 à 5 000 g/mol.

10. Utilisation selon l'une quelconque des revendications 1 à 9, dans laquelle les polyesters présentent des poids moléculaires M_{w} de 1 500 à 50 000 g/mol, de préférence de 2 000 à 30 000 g/mol.

11. Utilisation selon l'une quelconque des revendications 1 à 10, dans laquelle les polyesters présentent des indices d'acidité de 60 à 600 mg KOH/g de polymère, de préférence de 80 à 500 mg KOH/g de polymère.

12. Utilisation selon l'une quelconque des revendications 1 à 11, dans laquelle les substances difficilement solubles dans l'eau portent des groupes fonctionnels basiques.

13. Utilisation selon la revendication 12, dans laquelle l'amélioration de solubilité a lieu par formation d'un sel ou d'une structure de type sel entre la substance difficilement soluble et les polyesters.

14. Utilisation selon l'une quelconque des revendications 1 à 13, dans laquelle les substances difficilement solubles dans l'eau peuvent être des substances biologiquement actives ou des substances à effet.

15. Utilisation selon l'une quelconque des revendications 1 à 14, dans laquelle des agents actifs pharmaceutiques, cosmétiques, agrochimiques, diététiques ou des compléments alimentaires sont utilisés en tant que substances biologiquement actives.

16. Utilisation selon l'une quelconque des revendications 1 à 15, pour la fabrication de formes médicamenteuses.

17. Procédé de fabrication de sels polymères d'agents actifs basiques, **caractérisé en ce qu'**un mélange d'agents actifs et de polyesters ramifiés est fabriqué, les polyesters ramifiés étant obtenus par polycondensation d'acide citrique avec au moins un polyalcool contenant au moins deux groupes hydroxyle et éventuellement des composants acide polycarboxylique supplémentaires, le rapport en moles entre l'acide citrique et le polyalcool étant de 2,4:1 à 1:3, et le mélange est porté à une température supérieure à la température de transition vitreuse du polymère ou supérieure au point de fusion du polymère, ou **en ce que** le mélange est fabriqué sous la forme d'une solution, puis débarrassé du solvant.
